# EUROPEAN PATENT APPLICATION

(11) **EP 4 618 378 A1**
(43) Date of publication of application: **17.09.2025**
(21) Application number: 23890015.3
(22) Date of filing: 28.02.2023
(51) Int. Cl.: H02K 3/50, H02K 3/52

(54) **STATOR ASSEMBLY AND MOTOR**

(30) Priority: 14.11.2022 CN 202211421666
(71) Applicant: Foshan Welling Washer Motor Manufacturing Co., Ltd., Foshan, Guangdong 528311 (CN); Huai'An Welling Motor Manufacturing Co., Ltd., Huai'an, Jiangsu 223005 (CN)
(72) Inventor: ZHU, Xiaogang, Foshan, Guangdong 528311 (CN); GUO, Bingchun, Foshan, Guangdong 528311 (CN); SHI, Zhifeng, Foshan, Guangdong 528311 (CN)
(74) Representative: RGTH
(86) International application number: PCT/CN2023/078760
(87) International publication number: WO 2024/103567

(57) **Abstract**

Disclosed in the present application are a stator assembly and a motor. The stator assembly (1000) comprises an insulating frame (200), a winding (130), a wire leading-out base (210), a cover plate (220), and a plurality of first terminals (300). The winding (130) is wound around the insulating frame (200) and comprises a plurality of first lead-out wires (110); the wire leading-out base (210) is provided with a plurality of first mounting positions (211); the cover plate (220) is connected to the wire leading-out base (210) and covers the plurality of first mounting positions (211); the plurality of first terminals (300) are arranged in one-to-one correspondence with the plurality of first mounting positions (211); each of the first terminals (300) comprises a first welding portion (310) and a wire leading-out portion (320); each of the first welding portions (310) is used for welding a corresponding first lead-out wire (110); and the plurality of wire leading-out portions (320) penetrate through the cover plate (220).

## Description

### CROSS-REFERENCE TO RELATED APPLICATION

This application claims priority to and benefits of Chinese Patent Application No. 202211421666.5 filed November 14, 2022 and entitled "STATOR ASSEMBLY AND MOTOR," the entire contents of which are incorporated herein by reference.

### TECHNICAL FIELD

The present disclosure relates to the field of wiring terminals, and in particular, to a stator assembly and a motor.

### BACKGROUND

The power supply to the winding is established by connecting a power line to a terminal, and connecting the terminal to a lead-out wire of the motor. In related art, the stator has high requirements for miniaturization and slot fill rate, which brings unfavorable conditions for leading out wires of the winding. In order to facilitate installation, the lead-out wire is generally fixed by press-fitting. That is, the lead-out wire is fixed and fitted in a wiring slot by a pressing piece, to facilitate the engagement between the lead-out wire and a terminal. However, in this way, the connection achieved between the lead-out wire and the terminal is not stable and is prone to loosening up, which results in unsatisfactory contact.

### SUMMARY

The present disclosure aims to at least partially resolve the problems in the existing technology. Therefore, the present disclosure provides a stator assembly, according to an aspect thereof.

The present disclosure further provides a motor comprising the stator assembly, according to another aspect thereof.

In accordance with a first aspect of the present disclosure, an embodiment provides a stator assembly, comprising:
an insulating frame;
a winding, wound around the insulating frame and comprising a plurality of first lead-out wires;
a wire outlet base, arranged on the insulating frame, and provided with a plurality of first mounting positions;
a cover plate, connected to the wire outlet base and covering the plurality of first mounting positions;
a plurality of first terminals, arranged in one-to-one correspondence with the plurality of first mounting positions, wherein each of the first terminals comprises a first welding portion and a wire leading-out portion, each of the first welding portions is used for welding a corresponding first lead-out wire, and the wire leading-out portions extend out of the cover plate.

According to some embodiments of the present disclosure, an edge of the first welding portions is provided with a first bent portion, and the first bent portions extends in a direction facing away from the wire outlet base.

According to some embodiments of the present disclosure, the first bent portions is provided at an end of first welding portion facing an end of first lead-out wire. the first bent portions is provided with a first wire notch, and the first lead-out wires passes through first wire notch.

According to some embodiments of the present disclosure, first holder seats and second holder seats are arranged at an interval on the wire outlet base along an extending direction of the first lead-out wire. the first terminals is located between the first holder seats and the second holder seats, and the first lead-out wires is clamped in and held by the first holder seats and the second holder seats.

According to some embodiments of the present disclosure, the wire outlet base is provided with a clearance groove along the extending direction of the first lead-out wire, and the clearance groove runs through the wire outlet base along the extending direction of the first lead-out wire.

According to some embodiments of the present disclosure, the first terminals further comprises a first mounting portion. The first mounting portion is connected to the first welding portion and the wire leading-out portion, and the first mounting portion is inserted into the first mounting position.

According to some embodiments of the present disclosure, the wire outlet base is further provided with a second mounting position. The winding further comprises a plurality of second lead-out wires. The stator assembly further comprises a second terminal arranged at the second mounting position, and the second terminal comprises a connection portion and a plurality of second welding portions. The plurality of second welding portions are arranged at an interval on the connection portion, and the plurality of second welding portions are used for welding the plurality of second lead-out wires.

According to some embodiments of the present disclosure, an edge of the second welding portions is provided with a second bent portion, and the second bent portions extends in a direction facing away from the wire outlet base.

According to some embodiments of the present disclosure, the second terminal further comprises a protruding portion and a second mounting portion. The second mounting portion is connected to the connection portion and is inserted into the second mounting position, and the protruding portion is connected to the second mounting portion and extends in a direction facing away from the wire outlet base.

According to some embodiments of the present disclosure, the cover plate is provided with a peripheral edge and a plurality of through holes. The peripheral edge is arranged around the plurality of through holes and creates mounting cavities. The plurality of wire leading-out portions are located in the mounting cavities and correspondingly pass through the plurality of through holes.

According to some embodiments of the present disclosure, a positioning groove is provided at an end of the wire outlet base away from the insulating frame. A baffle plate is provided at an end of the cover plate away from the insulating frame, and the baffle plate is engaged with the positioning groove, such that a plastic-encapsulating space is formed by the wire outlet base, the cover plate, and the baffle plate.

In accordance with a second aspect of the present disclosure, an embodiment provides a motor, which comprises the stator assembly of the above embodiments.

Other aspects and advantages of the present disclosure will be given in the following description, some of which will become apparent from the following description or may be learned from practices of the present disclosure.

### BRIEF DESCRIPTION OF DRAWINGS

The present disclosure is further described below in conjunction with the accompanying drawings and embodiments. In the drawings:
FIG. 1 is a schematic structural diagram of a stator assembly according to an embodiment of the present disclosure;
FIG. 2 is a partial and exploded structural view of a stator assembly according to an embodiment of the present disclosure;
FIG. 3 is a schematic structural diagram of a first terminal according to an embodiment of the present disclosure;
FIG. 4 is a schematic structural diagram of a second terminal according to an embodiment of the present disclosure;
FIG. 5 is a schematic structural diagram of an insulating frame in connection with a wire outlet base according to an embodiment of the present disclosure;
FIG. 6 is a schematic structural diagram of a wire outlet base in connection with first terminals and a second terminal according to an embodiment of the present disclosure;
FIG. 7 is a schematic enlarged view of area A in FIG. 6;
FIG. 8 is a schematic structural diagram of a cover plate according to an embodiment of the present disclosure; and
FIG. 9 is a schematic structural diagram of an encapsulated stator assembly according to an embodiment of the present disclosure.

List of reference numerals as followings:
stator assembly 1000;
stator core 100; first lead-out wire 110; second lead-out wire 120; winding 130;
insulating frame 200; wire outlet base 210; first mounting position 211; first holder seat 212; second holder seat 213; clearance groove 214; positioning groove 215; second mounting position 216; cover plate 220; through hole 221; peripheral edge 222; mounting cavity 223; baffle plate 224;
first terminal 300; first welding portion 310; first bent portion 311; first wire notch 312; wire leading-out portion 320; first mounting portion 330; protrusion 331; and
second terminal 400; connection portion 410; second welding portion 420; second mounting portion 430; protruding portion 440; second bent portion 450; second wire notch 451.

### DETAILED DESCRIPTION OF EMBODIMENTS

Embodiments of the present disclosure will be described in detail below with reference to the accompanying drawings in which the same or like reference numerals refer to the same or like elements or elements having the same or like functions throughout. The embodiments described below with reference to the accompanying drawings are illustrative and are intended for illustrating only and are not to be construed as limiting the present disclosure.

In the description of the present disclosure, it should be understood that for the description of orientations, the orientation or positional relationships indicated by the terms such as "on," "below," "front," "rear," "left," "right" are based on orientation or positional relationships shown in the accompanying drawings, and are used only for ease and brevity of illustration and description, rather than indicating or implying that the mentioned apparatus or element must have a particular orientation or must be constructed and operated in a particular orientation. Therefore, such terms should not be construed as limiting of the present disclosure.

In the description of the present disclosure, the term "at least one" means one or more, the term "a plurality of" (or multiple) means at least two, the term such as "greater than," "less than," "exceed" or variants prior to a number or series of numbers is understood to exclude the number, and "above," "below," "within," etc. are understood to comprise the number. If used herein, the terms such as "first," "second," etc., are merely used for distinguishing technical features, and are not intended to indicate or imply relative importance, or implicitly point out the number of the indicated technical features, or implicitly point out the order of the indicated technical features.

In the description of the present disclosure, unless otherwise explicitly defined, the terms such as "configure," "install/mount" and "connect" should be understood in a broad sense, and those having ordinary skills in the art can reasonably determine the specific meanings of the above terms in the present disclosure based on the specific contents of the technical scheme.

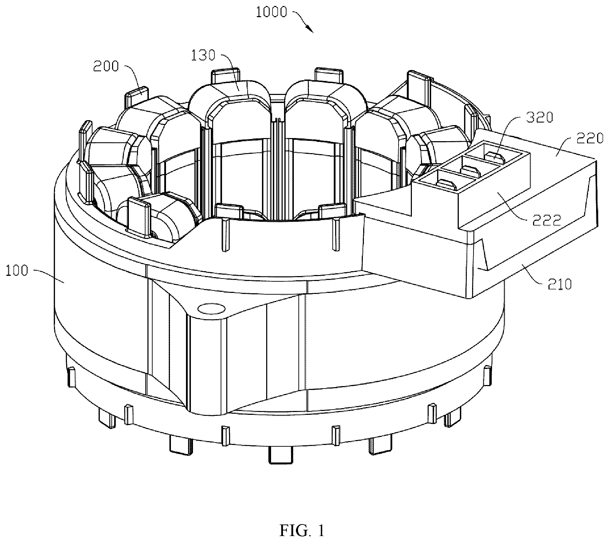

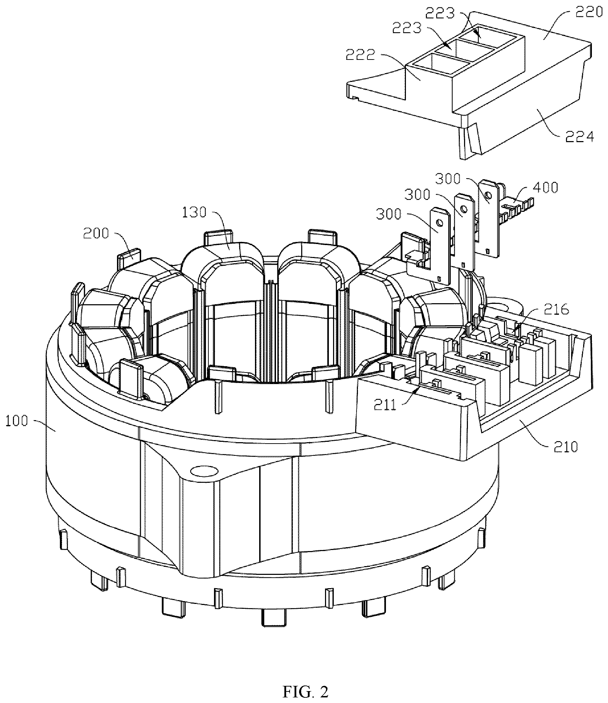

Referring to FIG. 1 and FIG. 2, an embodiment of the present disclosure provides a stator assembly 1000, which may be applied to a motor, such as a plastic-encapsulated motor, a washer motor, and the like. The stator assembly 1000 of the embodiment of the present disclosure comprises a stator core 100, an insulating frame 200, a winding 130, a wire outlet base 210, a cover plate 220, and a plurality of first terminals 300. The insulating frame 200 is embedded in the stator core 100. The winding 130 is wound around the insulating frame 200, and comprises a plurality of first lead-out wires 110. The wire outlet base 210 is connected to the insulating frame 200 and is located outside the stator core 100. In an embodiment, the wire outlet base 210 and the insulating frame 200 are integrally formed, or the wire outlet base 210 is connected to the insulating frame 200 by a buckle, a screw, or other means. In another embodiment, the wire outlet base 210 is connected to the stator core 100. The appropriate solution is determined according to an actual situation.

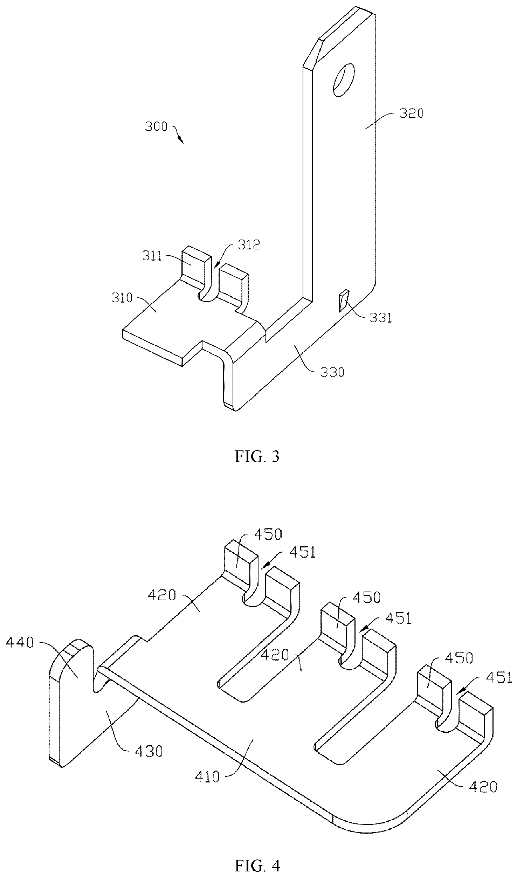

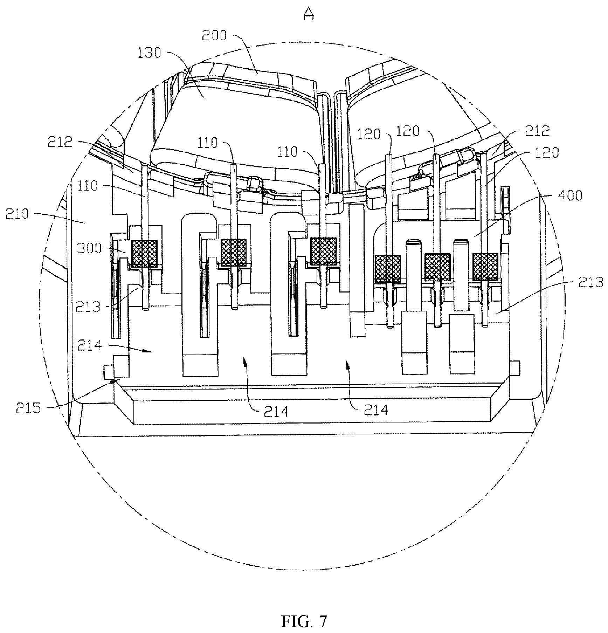

Referring to FIG. 3, FIG. 5, and FIG. 7, the wire outlet base 210 is provided with a plurality of first mounting positions 211, and the plurality of first terminals 300 are mounted into the plurality of first mounting positions 211 in one-to-one correspondence. In an embodiment, the first mounting positions 211 and the first terminals 300 are each provided with two or three, and the first lead-out wires 110 are correspondingly provided with two or three. The first terminals 300 may be made of a metal, such as copper or iron. Each of the first terminals 300 comprises a wire leading-out portion 320 and a first welding portion 310, and the wire leading-out portion 320 is connected to the first welding portion 310. Alternatively, the first terminal 300 further comprises a first mounting portion 330, and the wire leading-out portion 320 and the first welding portion 310 are respectively connected to the first mounting portion 330. The first welding portion 310 is configured for welding the corresponding first lead-out wire 110. Each of the plurality of first lead-out wires 110 are correspondingly welded to one of the plurality of first welding portions 310. Mesh blocks in FIG. 7 represent welding materials. After the welding is completed, the cover plate 220 is connected to the wire outlet base 210. The cover plate 220 can cover and protect the plurality of first mounting positions 211. In order to facilitate the connection between the wire leading-out portion 320 and a power cable, the wire leading-out portion 320 extends out of the cover plate 220, in this way, a power source can be easily connected to the winding 130 for power supply.

It can be understood that some stators have high requirements for miniaturization and slot fill rate, which will bring unfavorable conditions for leading out the wires of the winding. Therefore, the wire outlet base 210 is arranged outside the stator core 100, such that the lead-out wires of the winding 130 can be conveniently connected to the first welding portions 310 of the first terminals 300. As such, the welding difficulty is reduced, the production efficiency is improved, and automated production can be achieved to reduce the labor costs. The connection of the first lead-out wires 110 to the first welding portions 310 by welding can improve the stability of connection between the first lead-out wires 110 and the first terminals 300, making the first lead-out wires 110 less likely to loosen up and fall off from the first terminals 300.

Referring to FIG. 3, in an embodiment of the present disclosure, an edge of each of the first welding portions 310 is provided with a first bent portion 311, and each of the first bent portions 311 extends in a direction facing away from the wire outlet base 210. For example, the first bent portion 311 may be formed by bending the edge of the first welding portion 310 in the direction facing away from the wire outlet base 210, that is, the first bent portion 311 and the first welding portion 310 may be integrally formed, thus reducing the manufacturing complexity and costs. It can be understood that the first lead-out wire 110 is connected to the corresponding first welding portion 310 by soldering, and when the first terminal 300 is made of copper, the adhesion between solder and copper is satisfactory. In order to further improve the adhesion between solder and copper, the first bent portion 311 is arranged at the edge of the first welding portion 310, and the solder can be adhered to the first welding portion 310 and the first bent portion 311, such that the solder can better wrap the first lead-out wire 110, to reduce the occurrence of faulty soldering, and improve the stability and soldering quality of the connection between the first lead-out wire 110 and the first terminal 300.

Still referring to FIG. 3, in an embodiment of the present disclosure, the first bent portion 311 is arranged at an end of the first welding portion 310 in an extending direction of the first lead-out wire 110. For example, the first bent portion 311 is located at an end of the first welding portion 310 facing the end of the first lead-out wire 110. Each of the first bent portions 311 is further provided with a first wire notch 312, such that the corresponding first lead-out wire 110 can pass through the first wire notch 312. A height of the first wire notch 312 is greater than or equal to an outer diameter of the first lead-out wire 110, and a width of the first wire notch 312 is greater than or equal to the outer diameter of the first lead-out wire 110, such that the first lead-out wire 110 can pass through the first wire notch 312. It can be understood that the first wire notch 312 can limit the position of the first lead-out wire 110, and has a certain limiting effect on the first lead-out wire 110 during welding, thereby effectively reducing the misalignment and movement of the first lead-out wire 110, allowing the first lead-out wire 110 to be accurately welded to the first welding portion 310.

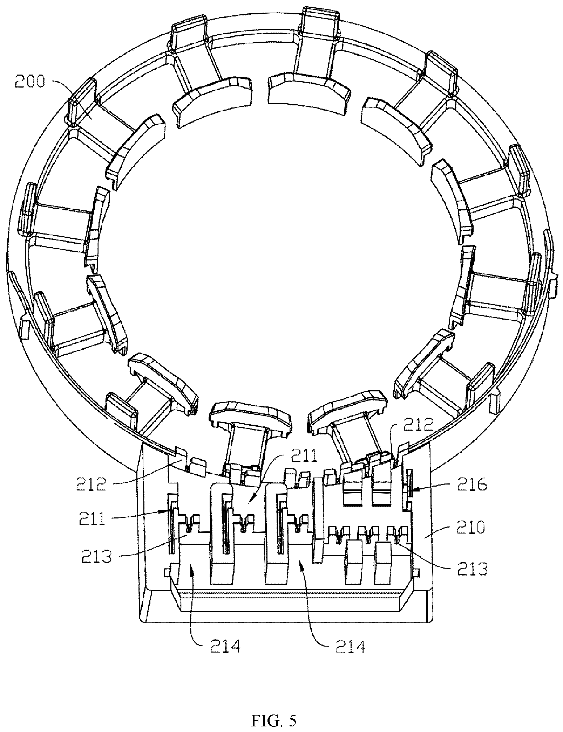

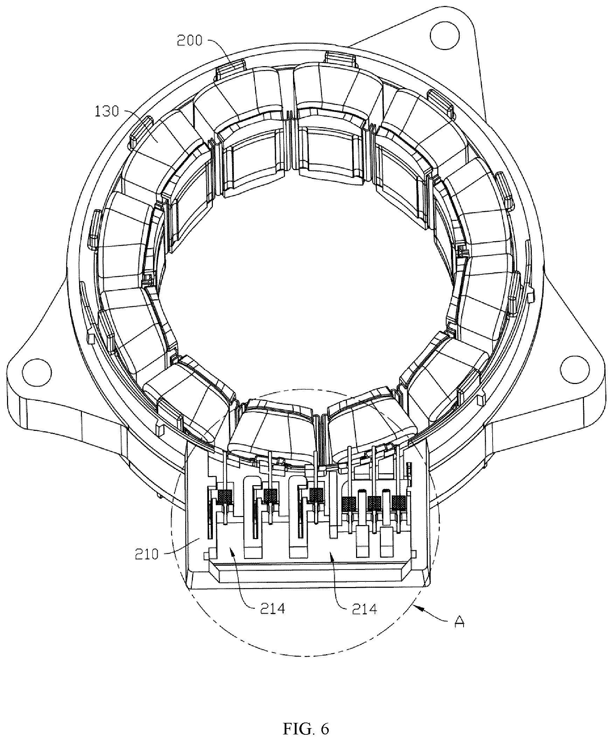

Referring to FIG. 5, FIG. 6, and FIG. 7, in an embodiment of the present disclosure, first holder seats 212 and second holder seats 213 are arranged at intervals on the wire outlet base 210 along the extending direction of the first lead-out wire 110, and each of the first terminals 300 is located between one of the first holder seats 212 and one of the second holder seats 213. When the first lead-out wire 110 needs to be welded, the first lead-out wire 110 may be sequentially clamped in and held by the corresponding first holder seat 212, the corresponding first wire notch 312, and the corresponding second holder seat 213. As such, the first lead-out wire 110 can be conveniently welded to the corresponding first welding portion 310, thereby reducing the welding difficulty and improving the welding efficiency.

Referring to FIG. 7, in an embodiment of the present disclosure, the wire outlet base 210 is provided with clearance grooves 214 along the extending direction of the first lead-out wire 110, and the clearance grooves 214 run through the wire outlet base 210 along the extending direction of the first lead-out wire 110. It can be understood that the length of the first lead-out wire 110 is relatively long in the welding stage, and after the first lead-out wire 110 is sequentially clamped and held in the corresponding first holder seat 212, the corresponding first wire notch 312, and the corresponding second holder seat 213, the first lead-out wire 110 passes through the corresponding clearance groove 214, such that the first lead-out wire 110 can be conveniently pulled to fit a welding position on the first welding portion 310, thereby facilitating the subsequent welding process. After the welding is completed, the first lead-out wire 110 is cut, for example, to the length shown in FIG. 7. Therefore, the provision of the clearance grooves 214 can reduce the welding difficulty and improve the welding efficiency.

Referring to FIG. 3 and FIG. 5, in an embodiment of the present disclosure, each of the first mounting positions 211 is provided with a mounting groove, and the first mounting portion 330 of each of the first terminals 300 is inserted into the corresponding mounting groove. As such, the mounting process is simple and convenient. In an embodiment of the present disclosure, each of the first mounting portions 330 is provided with a protrusion 331, and the protrusion 331 is inclined such that the first mounting portion 330 is in tight fit with the mounting groove, to effectively prevent the first terminal 300 from loosening up and falling off, and improve the stability of mounting of the first terminal 300.

Referring to FIG. 4, FIG. 5, and FIG. 7, in an embodiment of the present disclosure, the wire outlet base 210 is provided with a second mounting position 216, the winding 130 further comprises a plurality of second lead-out wires 120, the stator assembly 1000 further comprises a second terminal 400, and the second terminal 400 is mounted at the second mounting position 216. The second terminal 400 comprises a connection portion 410 and a plurality of second welding portions 420. The plurality of second welding portions 420 are arranged at intervals on the connection portion 410. The plurality of second welding portions 420 are configured for welding the second lead-out wires 120. The plurality of second lead-out wires 120 are welded to the plurality of second welding portions 420 in one-to-one correspondence. In an embodiment, three second welding portions 420 are provided, three second lead-out wires 120 are provided, and the three second lead-out wires 120 are correspondingly welded to the three second welding portions 420. Alternatively, two second welding portions 420 and two second lead-out wires 120 are provided. The number of the second welding portions 420 and the number of the second lead-out wires 120 may be determined according to an actual situation. The second terminal 400 may be made of a metal, such as copper or iron. The second terminal 400 is provided as a neutral point for connecting the second lead-out wires 120 by welding, such that a plurality of sets of winding wires forms a Y connection.

It should be noted that heat generated during welding of another second lead-out wire 120 has impact on the second lead-out wires 120 that have been welded before, especially has great impact on the second lead-out wire 120 in the middle. Therefore, the arrangement of the plurality of second welding portions 420 at intervals can effectively reduce the transfer of heat, reduce the impact of two adjacent second lead-out wires 120 on each other during welding, improve the welding quality, and reduce the amount of material used.

Referring to FIG. 4, in an embodiment of the present disclosure, an edge of each of the second welding portions 420 is provided with a second bent portion 450, and the second bent portion 450 extends in a direction facing away from the wire outlet base 210. In an embodiment, the second bent portion 450 may be formed by bending the edge of the second welding portion 420 in the direction facing away from the wire outlet base 210, that is, the second bent portion 450 and the second welding portion 420 may be integrally formed, thus reducing the manufacturing complexity and costs. It can be understood that the second lead-out wire 120 is connected to the corresponding second welding portion 420 by soldering, and when the second terminal 400 is made of copper, the adhesion between solder and copper is satisfactory. In order to further improve the adhesion between solder and copper, the second bent portion 450 is arranged at the edge of the second welding portion 420, and the solder can be adhered to the second welding portion 420 and the second bent portion 450, such that the solder can better wrap the second lead-out wire 120, to reduce the occurrence of faulty soldering, and improve the stability of the connection between the second lead-out wire 120 and the second terminal 400.

Referring to FIG. 4 and FIG. 7, in an embodiment of the present disclosure, the second bent portion 450 is arranged at an end of the second welding portion 420 in an extending direction of the second lead-out wire 120. For example, the second bent portion 450 is located at an end of the second welding portion 420 facing one end of the second lead-out wire 120. Each of the second bent portions 450 is further provided with a second wire notch 451, such that the corresponding second lead-out wire 120 can pass through the second wire notch 451. A height of the second wire notch 451 is greater than or equal to an outer diameter of the second lead-out wire 120, and a width of the second wire notch 451 is greater than or equal to the outer diameter of the second lead-out wire 120, such that the second lead-out wire 120 can pass through the second wire notch 451. It can be understood that the second wire notch 451 can limit the position of the second lead-out wire 120, and has a certain limiting effect on the second lead-out wire 120 during welding, thereby effectively reducing the misalignment and movement of the second lead-out wire 120, and ensuring that the second lead-out wire 120 can be accurately welded to the second welding portion 420.

Referring to FIG. 4, in an embodiment of the present disclosure, the second terminal 400 further comprises a protruding portion 440 and a second mounting portion 430. The second mounting portion 430 is connected to the connection portion 410. The second mounting position 216 is also provided with a mounting groove, and the second mounting portion 430 is inserted into the second mounting groove to limit the position of the second terminal 400. The protruding portion 440 is connected to the second mounting portion 430, and the protruding portion 440 extends in a direction facing away from the wire outlet base 210. It can be understood that when installing the second terminal 400, operation personnel or a machine can conveniently mount the second terminal 400 at the second mounting position 216 by gripping the protruding portion 440. The connection of the protruding portion 440 to the second mounting portion 430 facilitates the alignment of the second mounting portion 430 with the mounting groove during mounting the second terminal 400, thereby reducing the mounting difficulty and improving the mounting efficiency.

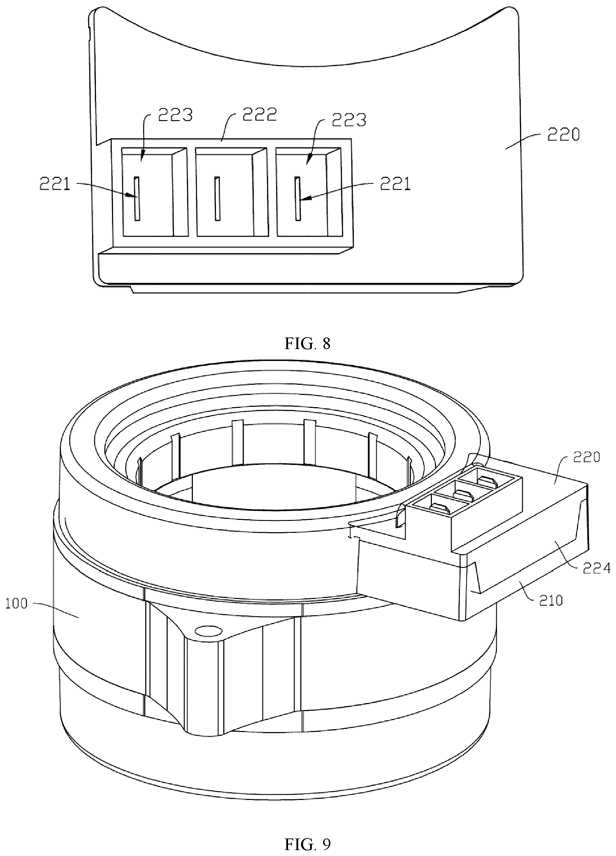

Referring to FIG. 1 and FIG. 8, in an embodiment of the present disclosure, the cover plate 220 is provided with a peripheral edge 222 and a plurality of through holes 221. In an embodiment, three through holes 221 are provided. The peripheral edge 222 is arranged and erected around the three through holes 221 and creates mounting cavities 223. For example, three mounting cavities 223 are formed. The three wire leading-out portions 320 correspondingly pass through the three through holes 221 and are located in the three mounting cavities 223. The peripheral edge 222 is configured to protect the wire leading-out portions 320, effectively reducing the occurrence of collision, damage and the like of the wire leading-out portions 320, such that it is convenient to connect the wire leading-out portions 320 to the power cable.

Referring to FIG. 2 and FIG. 7, in an embodiment of the present disclosure, a positioning groove 215 is provided at an end of the wire outlet base 210 away from the insulating frame 200. A baffle plate 224 is provided at an end of the cover plate 220 away from the insulating frame 200, and the baffle plate 224 is engaged with the positioning groove 215, such that a plastic-encapsulating space is formed by the wire outlet base 210, the cover plate 220, and the baffle plate 224. Therefore, after the first lead-out wires 110 and the second lead-out wires 120 are welded, the cover plate 220 is connected to the wire outlet base 210, and a sealing material is injected into the plastic-encapsulating space between the cover plate 220, the baffle plate 224, and the wire outlet base 210, to provide a protection effect and further improve the stability of the connection between the first lead-out wires 110 and the first terminals 300 and between the second lead-out wires 120 and the second terminals 400. In addition, the injection of the sealing material does not require manually crimping a terminal and wrapping the terminal with a sleeve, such that the number of parts and the costs are reduced. Because such an operation is simple, automated production can be realized to improve the production efficiency. Referring to FIG. 8, finally, the stator assembly 1000 may be encapsulated to reduce the temperature and noise of the motor.

A motor according to an embodiment of the present disclosure comprises the stator assembly 1000 of the above embodiments. In the motor of the embodiment of the present disclosure, the stator assembly 1000 of the above embodiments is used. The wire outlet base 210 is arranged on the insulating frame 200. The wire outlet base 210 is provided with a plurality of first mounting positions 211. A plurality of first terminals 300 are correspondingly arranged in the plurality of first mounting positions 211. Each of the first terminals 300 comprises a wire leading-out portion 320 and a first welding portion 310. The winding 130 is wound around the insulating frame 200. The winding 130 further comprises a plurality of first lead-out wires 110. With the configuration of the wire outlet base 210 and the skillful design of the structure of the first terminals 300, the lead-out wires can be conveniently connected to the first terminals 300, such that the difficulty of welding the first lead-out wires 110 to the first welding portions 310 is reduced, and the production efficiency is improved. The plurality of first lead-out wires 110 can be correspondingly welded to the plurality of first welding portions 310, such that the stability of connection between the first lead-out wires 110 and the terminals is improved, and the first lead-out wires 110 are less likely to loosen up. Because the wire leading-out portions 320 extend out of the cover plate 220, the wire leading-out portions 320 can be conveniently connected to a power cable.

Because the motor adopts all the technical schemes of the stator assembly 1000 of the above embodiments, the motor has at least all the beneficial effects achieved by the technical schemes of the above embodiments, and the details will not be repeated here.

The embodiments of the present disclosure have been described in detail above with reference to the accompanying drawings, but the present disclosure is not limited to the above embodiments, and various changes may be made within the knowledge of those having ordinary skills in the art without departing from the scope of the present disclosure.

## Claims

1. A stator assembly comprising:
an insulating frame;
a winding, wound around the insulating frame and comprising a plurality of first lead-out wires;
a wire outlet base, provided with a plurality of first mounting positions;
a cover plate, connected to the wire outlet base and covering the plurality of first mounting positions; and
a plurality of first terminals, arranged in one-to-one correspondence with the plurality of first mounting positions,
wherein each of the first terminals comprises a first welding portion and a wire leading-out portion, each of the first welding portions being configured to weld a corresponding first lead-out wire, and the plurality of wire leading-out portions extending out of the cover plate.

2. The stator assembly of claim 1, wherein an edge of the first welding portions is arranged with a first bent portion, and the first bent portions extending in a direction facing away from the wire outlet base.

3. The stator assembly of claim 2, wherein the first bent portions is arranged at an end of first welding portion facing an end of first lead-out wire, the first bent portions being provided with a first wire notch, and the first lead-out wires passing through first wire notch.

4. The stator assembly of any one of claims 1 to 3, wherein,
first holder seats and second holder seats are arranged at an interval on the wire outlet base along an extending direction of the first lead-out wire;
the first terminals is located between the first holder seats and the second holder seats; and
the first lead-out wires is clamped in and held by the first holder seats and the second holder seats.

5. The stator assembly of any one of claims 1 to 4, wherein,
the wire outlet base is provided with a clearance groove along the extending direction of the first lead-out wire; and
the clearance groove runs through the wire outlet base along the extending direction of the first lead-out wire.

6. The stator assembly of any one of claims 1 to 5, wherein the first terminals further comprises a first mounting portion, the first mounting portion being connected to the first welding portion and the wire leading-out portion, and the first mounting portion being inserted into the first mounting position.

7. The stator assembly of any one of claims 1 to 6, wherein,
the wire outlet base is further provided with a second mounting position;
the winding further comprises a plurality of second lead-out wires;
the stator assembly further comprises a second terminal arranged at the second mounting position, the second terminal comprising a connection portion and a plurality of second welding portions; and
the plurality of second welding portions are arranged at an interval on the connection portion, and the plurality of second welding portions being welded with the plurality of second lead-out wires.

8. The stator assembly of claim 7, wherein,
an edge of the second welding portions is provided with a second bent portion; and
the second bent portions extends in the direction facing away from the wire outlet base.

9. The stator assembly of claim 7, wherein,
the second terminal further comprises a protruding portion and a second mounting portion; and
the second mounting portion is connected to the connection portion and is inserted into the second mounting position, and the protruding portion is connected to the second mounting portion and extends in the direction facing away from the wire outlet base.

10. The stator assembly of any one of claims 1 to 9, wherein,
the cover plate is provided with a peripheral edge and a plurality of through holes;
the peripheral edge is arranged around the plurality of through holes and forms mounting cavities; and
the plurality of wire leading-out portions are located in the mounting cavities and correspondingly pass through the plurality of through holes.

11. The stator assembly of any one of claims 1 to 10, wherein,
a positioning groove is provided at an end of the wire outlet base away from the insulating frame;
a baffle plate is provided at an end of the cover plate away from the insulating frame; and
the baffle plate is engaged with the positioning groove, such that a plastic-encapsulating space is formed by the wire outlet base, the cover plate, and the baffle plate.

12. A motor comprising a stator assembly of any one of claims 1 to 11.
